# EUROPÄISCHE PATENTSCHRIFT

(11) **EP 0 507 157 B1**
(45) Veröffentlichungstag und Bekanntmachung des Hinweises auf die Patenterteilung: **22.03.1995**
(21) Anmeldenummer: 92104833.6
(22) Anmeldetag: 20.03.1992
(51) Int. Cl.: A23L 1/304, A23L 2/38

(54) **Mit Mineralstoffen angereichertes Fruchtsaftgetränk**
Isotonic fruit beverage enriched with minerals
Jus de fruit isotonique enrichi avec des minéraux

(30) Priorität: 05.04.1991 DE 4111040
(43) Veröffentlichungstag der Anmeldung: 07.10.1992
(73) Patentinhaber: Eckes-Granini GmbH & Co. Kommanditgesellschaft, D-33609 Bielefeld (DE)
(72) Erfinder: Fuchs,Günter Dr., W-4933 Blomberg (DE); Littmann,Ulrike, geb.Niemeier, W-4902 Bad Salzuflen (DE)
(74) Vertreter: Stracke, Alexander, Dipl.-Ing.

(56) Entgegenhaltungen:
- EP-A- 0 397 232
- DE-A- 3 444 068
- US-A- 4 786 510
- US-A- 4 871 554

## Beschreibung

Ein mit Mineralstoffen angereichertes Fruchtsaftgetränk ist aus der DE-OS 34 44 086 bekannt. Die Mineralstoffe sind wasserlösliche Mineralsalze verschiedenster Art.

Es ist jedoch nachgewiesen worden, daß die Versorgung der Menschen mit bestimmten Mineralstoffen, wie z. B. Calcium und Eisen ungenügend ist. Aus diesem Grunde sind Getränke auf den Markt gebracht worden, die mit einer Vielzahl von Mineralstoffen angereichert sind. Diese Mineralstoffe sind beispielsweise Natrium, Kalium, Magnesium und Calcium. Sie enthalten aber keine zugesetzten Eisensalze. Durch den Verzehr des auch aus der DE-OS 34 44 086 bekannten Getränkes kann keine ausreichende Versorgung mit Mineralstoffen erreicht werden. Geträube die Eisengluconat enthalten sind aus der EP-A-0 397 232 bekannt. Der vorliegenden Erfindung liegt die Aufgabe zugrunde, ein Getränk der eingangs genannten Art zu schaffen, mit dem die Mineralstoffversorgung sicherzustellen ist und welches darüber hinaus keinen den Tringgenuß negativ beeinflussenden Beigeschmack hat.

Die gestellte Aufgabe wird erfindungsgemäß dadurch gelöst, daß die der Fruchtmischung zugesetzten Mineralstoffe Trikaliumcitrat, Calciumlaktat, Magnesiumgluconat und Eisen-II-gluconat sind. Durch das Zuschlagen der vorgenannten Mineralstoffe bleibt das Getränk geschmacksneutral. Außerdem wird erreicht, daß der pH-Wert, wenn überhaupt, nur gering herabgesetzt wird. Für die Haltbarkeit des Getränkes ist es wichtig, daß der pH-Wert 4,3 nicht übersteigt. Um diesen Wert einzustellen, ist vorgesehen, daß dem Getränk Limetten- oder Zitronensaft zugeschlagen wird. Bei dem in Rede stehenden Fruchtsaftgetränk kann aufgrund der Eisenkonzentration ein metallischer Nachgeschmack auftreten. Um dieses zu verhindern, ist vorgesehen, daß die Fruchtmischung aus Acerolapüree, Maracujasaft, Ananas- und Limetten- oder Zitronensaft besteht. Das Acerolapüree hat einen hohen natürlichen Ascorbinsäuregehalt, wodurch das Eisen-Ion in der für die Resorption im Magen-Darm-Trakt wichtigen ersten Oxidationsstufe stabilisiert wird. Die Mineralsalzmischung besteht aus Trikaliumcitrat mit der chemischen Formel C₆H₅K₃O₇ , aus Calciumlaktat (CH₃-CHOH-COO)₂ aus Magnesiumgluconat nach der chemischen Formel Mg(CH₂OH(CHOH)₄COO)₂ und Eisen-II-gluconat mit der chemischen Formel (CH₂OH(CHOH)₄COO)₂Fe.

Zur Erläuterung der Erfindung wird nachfolgend eine Rezeptur als Beispiel angegeben:

| Stoffbezeichnung | Menge in g/l |
|---|---|
| Acerolapüree | 150 |
| Maracujasaft | 100 |
| Limetten- oder Zitronensaft | 20 |
| Anananssaft | 250 |
| Zucker | 60 |
| Trikaliumcitrat | 11,1 |
| Calciumlaktat | 10,25 |
| Magnesiumgluconat | 7,6 |
| Eisen-II-gluconat | 0,17 |
| Wasser | 661 |

## Patentansprüche

1. Mit Mineralstoffen angereichertes isotonisches Fruchtsaftgetränk, **dadurch gekennzeichnet,** daß die der Fruchtmischung zugesetzten Mineralstoffe Trikaliumcitrat, Calciumlaktat, Magnesiumgluconat und Eisen-II-gluconat sind.

2. Isotonisches Fruchtsaftgetränk nach Anspruch 1, dadurch gekennzeichnet, daß der pH-Wert des Fruchtsaftes durch Zugabe von Limetten- oder Zitronensaft auf einen pH-Wert von max. 4,3 eingestellt ist.

3. Isotonisches Fruchtsaftgetränk nach Anspruch 1 oder 2, dadurch gekennzeichnet, daß die Fruchtmischung des Fruchtsaftgetränkes aus Acerolapüree, Maracujasaft, Ananassaft und Limetten- oder Zitronensaft besteht.

## Claims

1. Isotonic fruit juice beverage enriched with mineral substances, characterised thereby that the mineral substances added to the fruit mixture are tricalcium citrate, calcium lactate, magnesium gluconate and iron-II-gluconate.

2. Isotonic fruit juice beverage according to claim 1, characterised thereby that the pH value of the fruit juice is adjusted by addition of lime or lemon juice to a pH value of at most 4.3.

3. Isotonic fruit juice beverage according to claim 1 or 2, characterised thereby that the fruit mixture of the fruit juice beverage consists of azarole puree, maracuja juice, pineapple juice and lime or lemon juice.

## Revendications

1. Boisson de jus de fruits isotonique enrichie en substances minérales, caractérisée en ce que les substances minérales ajoutées au mélange de fruits sont du citrate tripotassique, du lactate de calcium, du gluconate de magnésium, et du gluconate ferreux (II).

2. Boisson de jus de fruits isotonique selon la revendication 1, caractérisée en ce que la valeur de pH du jus de fruit est ajustée à une valeur de pH d'au maximum 4,3 par addition de jus de limette ou de citron.

3. Boisson de jus de fruits isotonique, selon la revendication 1 ou la revendication 2, caractérisée en ce que le mélange de fruits de la boisson de jus de fruit est formé de purée d'acérola, de jus de maracuja, de jus d'ananas et de jus de limette ou de jus de citron.
